(19) Europäisches Patentamt
European Patent Office
Office européen des brevets

(11) **EP 3 477 345 A1**

(12) **EUROPEAN PATENT APPLICATION**

(43) Date of publication:
**01.05.2019 Bulletin 2019/18**

(51) Int Cl.:
**G01V 1/38** (2006.01)    **G01V 1/36** (2006.01)

(21) Application number: **18201638.6**

(22) Date of filing: **19.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2017  US 201762575639 P**
**12.10.2018  US 201816159286**

(71) Applicant: **PGS Geophysical AS**
**0216 Oslo (NO)**

(72) Inventor: **DRANGE, Geir Andre Motzfeldt**
**Houston, TX 77079 (US)**

(74) Representative: **Gill Jennings & Every LLP**
**The Broadgate Tower**
**20 Primrose Street**
**London EC2A 2ES (GB)**

(54) **DETERMINING DEPTH OF SENSORS IN MARINE STREAMERS**

(57)    Determining depth of sensors in marine streamers. Some example embodiments include: reading a depth value at a steering device of a sensor streamer (604); reading a plurality of tilt values from a respective plurality of tilt sensors in the sensor streamers (606); and calculating a plurality of depth values comprising one depth value for the location of each tilt sensor of the plurality of tilt sensors, each calculation using the depth value at the steering device and a tilt value from the plurality of tilt values (608).

FIG.6

EP 3 477 345 A1

**Description**

CROSS-REFERENCE TO RELATED APPLICATIONS

This application claims the benefit of U.S. Provisional Application Serial No. 62/575,639 filed October 23, 2017 titled "Tilt Sensors for Estimation of Streamer Depth Between Steering Devices." The provisional application is incorporated by reference herein as if reproduced in full below.

BACKGROUND

Geophysical surveying (e.g., seismic, electromagnetic) is a technique where two- or three-dimensional "pictures" of the state of an underground formation are taken. Geophysical surveying takes place not only on land, but also in marine environments (e.g., oceans, large lakes). Marine geophysical surveying systems frequently use a plurality of geophysical streamers comprising sensors to detect energy emitted by one or more sources after the energy interacts with underground formations below the water bottom. For example, seismic streamers may include sensors for detecting and recording seismic signals reflected from the subterranean formations including hydrocarbon deposits.

Geophysicists, who analyze the recorded seismic signals, would like to know the precise horizontal location and depth of a sensor streamer (and particularly the sensors of a seismic streamer) at the time when the reflected seismic signals intercept the seismic streamer. Any system or method that better determines or estimates depth of a seismic streamer during recordation of seismic signals would provide better information regarding the subterranean formations, and thus would provide a competitive advantage in the marketplace.

BRIEF DESCRIPTION OF THE DRAWINGS

For a detailed description of example embodiments, reference will now be made to the accompanying drawings (not necessarily to scale) in which:

Figure 1 shows an overhead view of a marine survey system in accordance with at least some embodiments;
Figure 2 shows side elevation views of portions of a sensor streamer in accordance with at least some embodiments;
Figure 3 shows a side elevation, partial cut away, view of a representation of a streamer section in accordance with at least some embodiments;
Figure 4 shows a simplified side-elevation view of a portion of a sensor streamer in accordance with at least some embodiments;
Figure 5 shows a simplified side-elevation view of a portion of a sensor streamer in accordance with at least some embodiments;
Figure 6 shows a method in accordance with at least some embodiments; and
Figure 7 shows a computer system in accordance with at least some embodiments.

DEFINITIONS

Various terms are used to refer to particular system components. Different companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to." Also, the term "couple" or "couples" is intended to mean either an indirect or direct connection. Thus, if a first device couples to a second device, that connection may be through a direct connection or through an indirect connection via other devices and connections.

"Cable" shall mean a flexible, axial load carrying member that also comprises electrical conductors and/or optical conductors for carrying electrical power and/or signals between components.

"Rope" shall mean a flexible, axial load carrying member that does not include electrical and/or optical conductors. Such a rope may be made from fiber, steel, other high strength material, chain, or combinations of such materials.

"Line" shall mean either a rope or a cable.

"Proximal" in relation to location along a sensor streamer shall mean more forward or closer to the tow vessel.

"Distal" in relation to a location along a sensor streamer shall mean more aft or farther from the tow vessel.

"Streamer section" shall refer to a flexible outer jacket with seismic sensors therein. A streamer section may include a first connector coupled to a first end of the flexible outer jacket, and a second connector coupled to an opposite end of the flexible outer jacket. The first connector may be configured to couple to a mating connector of a more proximal streamer section, and the second connector may be configured to couple to a mating connector of a more distal streamer section.

DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

Various embodiments are directed to methods for determining depth of seismic sensors in sensor streamers, where the sensor streamers do not include depth sensors at the locations of the seismic sensors. More particularly, various embodiments are directed to methods of using a known depth (e.g., depth as measured by a steering device) and tilt values read from tilt sensors co-located with seismic sensors, to calculate or estimate the depth of the seismic sensors between steering devices. The specification first turns to an example marine seismic survey system.

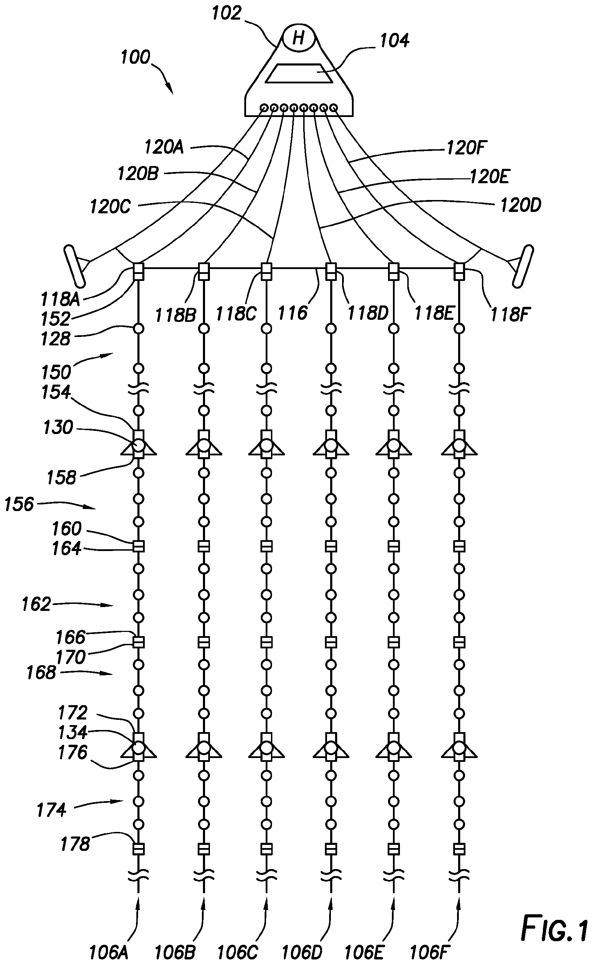

Figure 1 shows an overhead view of a marine survey system 100 in accordance with at least some embodiments. In particular, Figure 1 shows a survey or tow vessel 102 having onboard equipment, herein collectively referred to as recording system 104, such as navigation, energy source control, and a data acquisition system. Tow vessel 102 is configured to tow one or more geophysical sensor cables 106A-F through the water. In the context of towed geophysical sensor cables used in seismic surveys, the cables are hereafter referred to as "sensor streamers." While Figure 1 illustratively shows six sensor streamers, one or more sensor streamers may be used.

The sensor streamers 106A-F are each coupled, at the ends nearest the tow vessel 102 (i.e., the "proximal" or "forward" ends) to a respective lead-in cable termination 118A-F. The lead-in cable terminations 118A-F are coupled to or associated with the spreader lines 116 so as to control the lateral positions of the forward ends of the sensor streamers 106A-F with respect to each other and with respect to the tow vessel 102. Electrical and/or optical connections between the appropriate components in the recording system 104 and the sensors in the sensor streamers 106A-F (e.g., sensor 128 in sensor streamer 106A) may be made using inner lead-in cables 120A-F, respectively.

In order to control depth of the sensor streamers, and in some cases to control lateral spacing between the sensor streamers, the sensor streamers may be associated with a plurality of streamer positioning devices or steering devices periodically spaced along the sensor streamers. Again referring to sensor streamer 106A as representative, representative sensor streamer 106A may be associated with a steering device 130 coupled closer to the proximal end of sensor streamer 106A, and steering device 134 shown coupled farther from the proximal end. The steering devices 130 and 134 may provide not only depth control, but also lateral position control. In some example cases, the steering devices may be EBIRD lateral, vertical, and roll control devices available from Kongsberg Maritime of Kongsberg, Norway. While Figure 1 shows only two steering devices 130 and 134 associated with representative sensor streamer 106A, in practice each sensor streamer may be from a few thousand meters to 10 kilometers or more in length, and have positioning devices periodically spaced along the entire length of the sensor streamer (e.g., every 300 meters). Thus, each sensor streamer may have 30 or more steering devices spaced along the sensor steamer. In order to control depth, each steering device has its own depth sensor and can receive from the recording system 104 on tow vessel 102 a depth control set point. Using the depth control setpoint and the depth reading from the onboard depth sensor, each steering device may independently control its depth, and thus controls the depth of the sensor streamer portions near the steering device.

Each sensor streamer 106A-F may comprise a plurality of streamer sections coupled end-to-end to create the overall sensor streamer 106A-F. For example, and again referring to sensor streamer 106A as representative, the proximal-most streamer section 150 comprises a connector 152 that couples to the inner lead-in cable 120A and spreader lines 116. Example streamer section 150 comprises a second connector on the distal end thereof, but the second connector is not specifically shown. Moving distally along the example sensor streamer 106A, a subsequent streamer section may have a connector 154 coupled directly to the steering device 130. The next downstream or distal streamer section 156 comprises connector 158 at a proximal end and connector 160 at a distal end, with connector 158 coupled directly to the steering device 130. Stated otherwise, example steering device 130 couples between connector 154 and connector 158. The next streamer section 162 comprises connector 164 at a proximal end and connector 166 at a distal end. Connector 164 in the example system couples directly to connector 160. The next streamer section 168 comprises connector 170 at a proximal end and connector 172 at a distal end. Connector 170 in the example system couples directly to connector 166. Connector 172 couples directly to the example steering device 134. The next streamer section 174 comprises connector 176 at a proximal end and connector 178 at a distal end. Connector 176 in the example system couples directly to the steering device 134. Stated otherwise, steering device 134 couples between connector 172 and connector 176. In practice each sensor streamer may be a few thousand meters to 10 kilometers or more in length, and may be made of up many streamer sections. For example, each streamer section (e.g., 156, 162, 168, 174) may be about 75 to 100 meters in length; and thus, an overall sensor streamer may be made up of one hundred or more individual streamer sections.

Still referring to Figure 1 the representative sensor streamer 106A comprises three streamer sections 156, 162, and 168 between the example steering devices 130 and 134. In an example system where each example streamer section 156, 162, and 168 may be 100 meters in length, the distance between the steering devices 130 and 134 is 300 meters. However, streamer sections may be shorter or longer, and greater or fewer streamer sections may be placed between steering devices depending on expected sea and water conditions of the marine survey. Thus, any suitable distance between the steering devices may be implemented. The specification now turns to a description of possible profiles of sensor streamer portions between steering devices.

Streamer sections, and thus sensor streamers, may be designed and constructed to be neutrally buoyant assuming a particular density of water. However, density of water is affected by many parameters, such as temperature and salinity. It follows that a sensor streamer designed to be neutrally buoyant may actually be neutrally buoyant, positively buoyant, or negatively buoyant depending on temperature and salinity of the water in which the sensor streamer is submerged. Moreover, the salinity and temperature of water through which a sensor streamer is towed may be spatially variable, and thus a single sensor streamer considered along its length may be simultaneously neutrally buoyant, positively buoyant, and/or negatively buoyant. When portions of a sensor streamer are precisely neutrally buoyant, the depth of the sensor streamer portions between steering devices will tend to have the same depth. When the portions of the sensor streamer are negatively buoyant, sensor streamer portions between steering devices will tend to droop or have a depth greater than the steering devices. Oppositely, when the portions of the sensor streamer are positively buoyant, sensor streamer portions between steering devices will tend to rise upward or have a depth less than the steering devices.

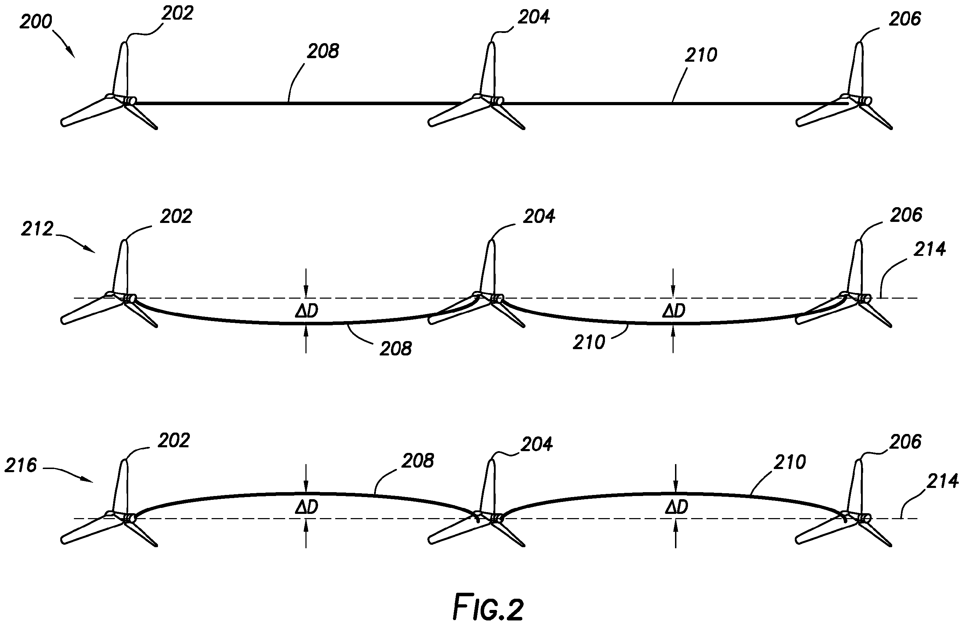

Figure 2 shows side elevation views of portions of a sensor streamer in accordance with at least some embodiments. In particular, view 200 shows a portion of a sensor streamer comprising three steering devices 202, 204, and 206. Steering devices 130 and 134 may be any of the steering devices 202, 204, and 206. Sensor streamer portion 208, which may be one or more streamer sections, spans between steering devices 202 and 204. Sensor streamer portion 210, which may be one or sensor streamer sections, spans between steering devices 204 and 206. In the view 200 it is assumed that the sensor streamer portions 208 and 210 are neutrally buoyant taking into account the density of the surrounding water (not specifically shown). Assuming the steering devices 202, 204, and 206 are at the same depth, the depth of the sensor streamer portions 208 and 210 between the steering devices 202, 204, and 206 are the same as the depth at the steering devices 202, 204, and 206.

Now consider a situation where the sensor streamer portions 208 and 210 are negatively buoyant. View 212 shows the example steering devices 202, 204, and 206 spanned by sensor streamer portion 208 and 210. When the sensor streamer portions 208 and 210 are negatively buoyant, the sensor streamer portions 208 and 210 will tend to droop between the steering devices 202, 204, and 206. In example systems where the length of the sensor streamer portions 208 and 210 are each 300 meters, and assuming the steering devices 202, 204, and 206 are at the same depth (as shown by dashed line 214) at the inflection point of the droop the sensor streamer portions may be three meters or more deeper than the steering devices, as shown by the $\Delta D$ in the drawings. When utilizing seismic data collected by a sensor streamer to generate an image of a subterranean geological structure, an unaccounted for three meter depth difference may adversely affect the imaging of the subterranean geological structure.

Now consider a situation where the sensor streamer portions 208 and 210 are positively buoyant. View 216 shows the example steering devices 202, 204, and 206 spanned by sensor streamer portions 208 and 210. When the sensor streamer portions 208 and 210 are positively buoyant, the sensor streamer portions 208 and 210 will tend to rise between the steering devices 202, 204, and 206. In example systems where the length of the sensor streamer portions 208 and 210 are each 300 meters, and assuming the steering devices 202, 204, and 206 are at the same depth (as again shown by dashed line 214) at the inflection point of the rise the sensor streamer portions may be three meters or more shallower than the steering devices, as shown by the $\Delta D$ in the drawings. Again, when utilizing seismic data collected by a sensor streamer to generate an image of a subterranean geological structure, an unaccounted for three meter depth difference may adversely affect the imaging of the subterranean geological structure. While Figure 2 shows two contiguous portions having the same buoyancy, it is noted that even contiguous sensor streamer portions may experience different buoyancies, such as when the sensor streamer is towed through an area of water currents (e.g., where fresh water from a large river flows into the sea). Thus, even for two contiguous sensor streamer portions, one portion may be negatively buoyant and one portion positively buoyant.

Related-art systems address the depth differences caused by slight positive or negative buoyancy by including depth sensors within the streamer sections, where the depth sensors measure depth by measuring ambient pressure of the water surrounding the streamer section where the depth sensor is located. For example, each streamer section in the related art may include a depth sensor, or each sensor group along a streamer section may include a depth sensor. However, including one or more depth sensors within a streamer section has several detrimental effects. First, for proper operation each depth sensor is exposed to the surrounding water, and thus including one or more depth sensors in a streamer section requires creating a hole or aperture through the flexible outer jacket of the streamer section, one aperture for each depth sensor. The apertures through the flexible outer jacket compromise the water tight integrity of the streamer section, and are subject to plugging by marine growth. Second, depth sensors must be periodically calibrated, and thus including depth sensors imposes a periodic calibration burden for each depth sensor. Depth sensors also add weight to the sensor streamer (which may exacerbate negative buoyancy issues), and each depth sensor increases the cost and complexity of the streamer section. By contrast, in accordance with example embodiments the depth of each seismic sensor along a sensor streamer portion (e.g., the streamer sections between steering devices) may be determined with equipment that may already be present in the streamer sections and taking into account that each steering device implements a depth sensor (in order to maintain a programmed depth setpoint).

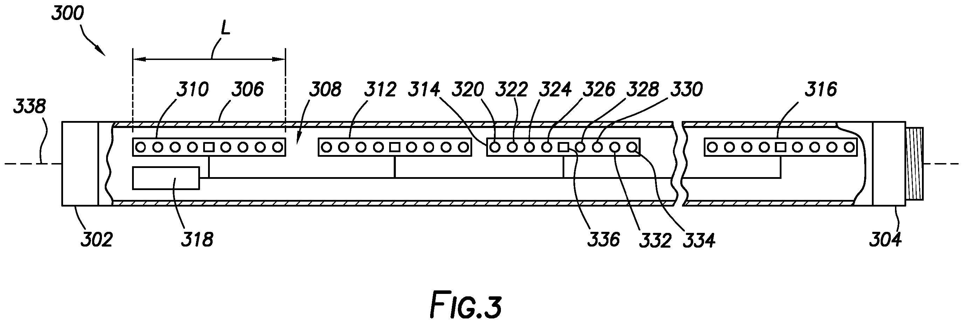

Figure 3 shows a side elevation, partial cut-away, view of a representation of a streamer section in accordance with at least some embodiments. In particular, example streamer section 300 is representative of any of the previously discussed streamer sections 150, 156, 162, 168, and 174. The example streamer section 300 comprises a connector 302 at the upstream or proximal end, and a connector 304 at the downstream or distal end. Connector 304 is shown as a "male" connector, and in such a situation the connector 302 would be a "female" connector. However, the male and female arrangements can be reversed. Between the connectors 302 and 304 resides an outer jacket 306 of flexible material, and the outer jacket 306 defines an interior volume 308. Though not specifically shown so as not obscure various principles regarding the sensor groups (discussed more below), the streamer section 300 would likewise contain strength members in the form of ropes coupled between the connectors 302 and 304 such that towing forces are carried along the ropes and not the outer jacket 306. The streamer section 300 would also contain various power and communication conductors, though again such components are not shown so as not to unduly complicate the figure.

Within the interior volume 308 resides a plurality of sensors. In accordance with example systems and methods, the sensors are conceptually divided into sensor groups. Figure 3 shows four example sensor groups 310, 312, 314, and 316. While four sensor groups are shown in Figure 3, a streamer section of 100 meters in length may be designed and constructed to implement between 8 and 16 sensor groups, as one example. Each sensor group spans an axial length along the streamer section. For example, sensor group 310 spans an axial length L along the streamer section 300 (the axial length measured parallel to the central axis 338 of the streamer section 300). The remaining sensor groups span similar lengths, but those lengths are not specifically referenced so as not to unduly complicate the figure. For an example streamer section 300 having an overall length of 100 meters, and containing eight sensor groups, each sensor group may span about 12.5 meters of axial distance. The sensors of each sensor group are communicatively coupled to a digitizer 318 disposed within the interior volume 308. Though only one digitizer 318 is shown within the example streamer section 300, one or more digitizers may be implemented within any particular streamer section. The example digitizer 318 reads analog values created by sensors of the sensor groups, creates digital values, and in cooperation with other devices (not specifically shown) transfers the digital values to the recording system 104 (Figure 1) on the tow vessel 102 (also Figure 1). The recording system 104 thus creates an original recording of the various values sensed by sensors of each sensor group.

Still referring to Figure 3, in example systems each sensor group comprises a plurality of sensors. In particular, each sensor group may comprises a plurality of sets of co-located sensors. Referring to sensor group 314 as representative of all the sensor groups, the representative sensor group 314 comprises eight sets of co-located sensors, being sensors 320, 322, 324, 326, 328, 330, 332, and 334. While eight sets of co-located sensors are shown, two more sets of co-located sensors may be part of a sensor group. Each set of co-located sensors may comprise two sensors, with each sensor responsive to different aspects of seismic signals that intercept the streamer section. For example, a set of co-located sensors may include a device sensitive to pressure of passing seismic signals (e.g., a hydrophone), and the set of co-located sensors may include a device sensitive to particle motion associated with passing seismic signals (e.g., a geophone or a single axis or multi-axis accelerometer). In practice, the hydrophones of a sensor group are coupled in parallel, and each axis of the accelerometers of the sensor group are coupled in parallel.

The physical orientation of the hydrophone has no significant relationship to the measurements taken responsive to a seismic signal. However, the physical orientation of an accelerometer affects the measurements taken by the accelerometer. For example, an axis of an accelerometer aligned with the direction of travel of a seismic signal through the water produces a larger reading than an axis of an accelerometer perpendicular to the direction of travel. Thus, for later analysis of the recording obtained by the recording system 104, it is helpful to know the orientation of the accelerometers at the time readings are taken. In accordance with example systems each streamer section includes at least one tilt sensor. In the example embodiment of Figure 3, each sensor group has and/or is associated with a tilt sensor. Again referring to sensor group 314 as representative, tilt sensor 336 is physically disposed within the axial length of the sensor group. In the example sensor group 314, the tilt sensor 336 is disposed in the middle of the sensor group, but any axial location within the sensor group may be used. Thus, each time the digitizer 318 reads the sensors of a sensor group and creates data, the digitizer 318 also reads the tilt sensor to obtain tilt values representing the orientation of the streamer section at the location of the particular tilt sensor (and thus at the location of the sensor group). Before going on to describe the various embodiments of determining depth of the seismic sensors using the tilt sensors, the specification describes example data collection or recording associated with marine seismic survey.

In example systems, a source device is towed in the water in operational relationship to the sensor streamers 106A-F. In some cases, the source device is towed by the tow vessel 102, and in other cases the source device is towed by a separate vessel. Regardless of how the source device is towed, the recording system 104 either creates a signal that triggers the source device (e.g., air gun), or the recording system 104 is provided an indication of the time when the source device is triggered. Based on the triggering of the source device, the recording system 104 records data from the sensor groups along each sensor streamer 106A-F in a window of time long enough to capture seismic signals of interest. For example, the window of time may be set based on the depth of survey (i.e., an assumed depth of the subterranean geological formation), the speed of sound in water and the underlying earth, and the number of reflections desired to be captured. In some cases, the window of time may span between 1 and 30 seconds after triggering of the seismic source. During the window of time, data is read from each sensor group in a sensor streamer at a rate determined by the Nyquist rate for the frequency of the seismic signals of interest. For example, in many cases the frequencies of interest for seismic survey is 300 Hertz and below, and thus the recording system 104 may command the various devices in the sensor streamers (e.g., the digitizers 318 and related equipment) to take 600 readings or more per second from each sensor group in each sensor streamer. Referring again to Figure 3, example digitizer 318 thus may, 600 times a second more, read values from each sensor group to which the digitizer 318 is coupled (e.g., the sensor groups in streamer section 300), place a time stamp and sensor group identifier, and send the readings as packet-based (i.e., digital) messages to the recording system 104. As part of reading the values from each sensor group, the example digitizer 318 also reads a tilt value from the tilt sensor (e.g., tilt sensor 336) of each sensor group and sends the tilt values along to the recording system. It is noted that the tilt at the location of each tilt sensor is a slowly changing variable compared to the frequencies of interest in seismic surveys, and thus reading and providing the tilt value may be at a slower rate than reading the example seismic sensors 320-334. Stated otherwise, while the tilt sensor may be read at the same rate as the seismic sensors, the tilt values may also be read at longer intervals (e.g., every second, every five seconds), yet the tilt value are still applicable to the associated seismic sensors.

Moreover, in example systems the recording system 104 also periodically records depth values from each steering device along each sensor streamer 106A-F. That is, example steering devices 130 and 134 are communicatively coupled to the recording system 104 (e.g., to receive depth setpoint values), and the example steering devices 130 and 134 may be programmed to periodically send depth values representing actual depth of the steering device at the time of the reading. As with tilt, depth at each steering device is a slowly changing variable (compared to the frequencies of seismic signals), and thus reading or providing the depth value read at each steering device may be at a slower rate than data created from seismic sensors. Stated otherwise, depth values may be read at longer intervals (e.g., once a second, once every five seconds, once a minute), yet the depth values are still associable with seismic sensors.

The recording system 104 thus creates an original recording of data within a time window associated with triggering of the seismic source. The original recording comprises data values from sensor groups along each sensor streamer, tilt values from each tilt sensor of each streamer section (or each sensor group of each streamer section), and depth values from each steering device along each sensor streamer. The original recording contains other information not particularly relevant to the further discussion, such as information that describes the horizontal location of each sensor streamer at each point in time (e.g., location of the tow vessel 102 at each triggering of the seismic source, location of a lead buoy, location of a tail buoy, etc.).

As alluded to above, the original recording created by the recording system 104 may be used to generate an image of the geological structure located beneath the sea floor. The image of the geological structure may be created by the recording system 104 itself, or more likely the image of the geological structure is created by one or more computer systems onshore using data obtained from recording system 104. Prior to creating the image of the geological structure, however, in accordance with various embodiments, a modified or new recording may be created that includes depth values associated with each tilt sensor along each sensor streamer 106A-F. The new recording may be created by the recording system 104 during or after the creation of the original recording, the new recording may be co-created by the recording system 104 and an onshore computer system, or the new recording may be created solely by an onshore computer system.

In accordance with example embodiments, the depth values at the location of each tilt sensor within a streamer section are created without using a depth sensor disposed within the streamer section in which the tilt sensors are located. More specifically, various embodiments are based on the realization that depth sensors in each streamer section are not needed to determine the depth at the location of the tilt sensors (or, equivalently stated, to determine the depth at the location of each sensor group). The tilt sensors are present to assist in the analysis of data from the accelerometers; however, tilt values from the tilt sensors may be combined with depth values from the steering devices to create depth values at the location of each tilt sensor and/or each sensor group.

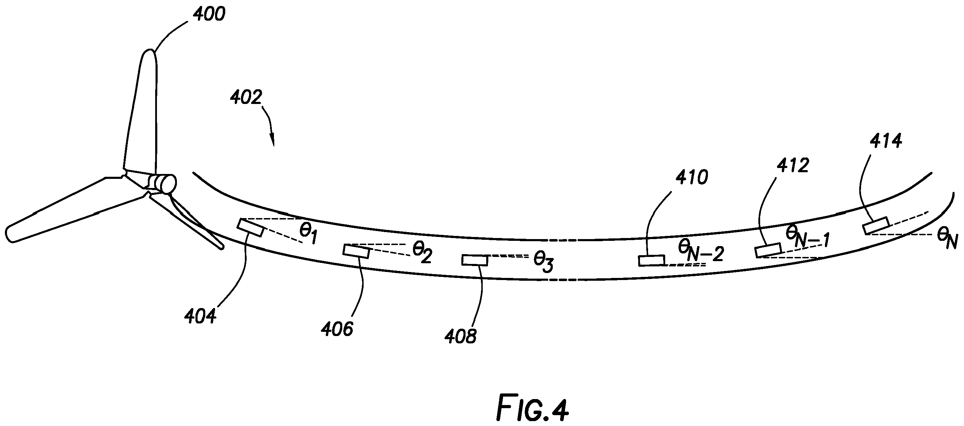

Figure 4 shows a simplified side-elevation view of a portion of a sensor streamer in accordance with at least some embodiments. In particular, Figure 4 shows a steering device 400 (which could be any of the previously discussed steering devices) and a sensor streamer portion 402 (that may comprise one or more streamer sections) that is negatively buoyant and thus droops below the depth of the steering device 400. Disposed within and along the sensor streamer portion 402 is a plurality of tilt sensors 404, 406, 408, 410, 412, and 414, but their respective seismic sensors are not shown so as not to unduly complicate the figure. At a snapshot in time, the steering device has a particular depth, and each tilt sensor has an associated tilt value. In the example shown, tilt sensor 404 has a tilt value $\theta_1$, tilt sensor 406 has

a tilt value $\theta_2$, tilt sensor 408 has a tilt value $\theta_3$ (which in the example situation may be close to zero), tilt sensor 410 has a tilt value $\theta_{N-2}$, tilt sensor 412 has a tilt value $\theta_{N-1}$, and tilt sensor 414 has a tilt value $\theta_N$. The tilt values $\theta_1$, $\theta_2$, and $\theta_3$ may be assigned positive values, while the tilt values $\theta_{N-2}$, $\theta_{N-1}$, and $\theta_n$ are negative values (but negative value convention may be reversed). Using the example tilt values, the known depth at the location of the steering device 400, and the known distance between the tilt sensors (established during construction), the depth at the location of each tilt sensor (and thus at the location of each sensor group) can be calculated.

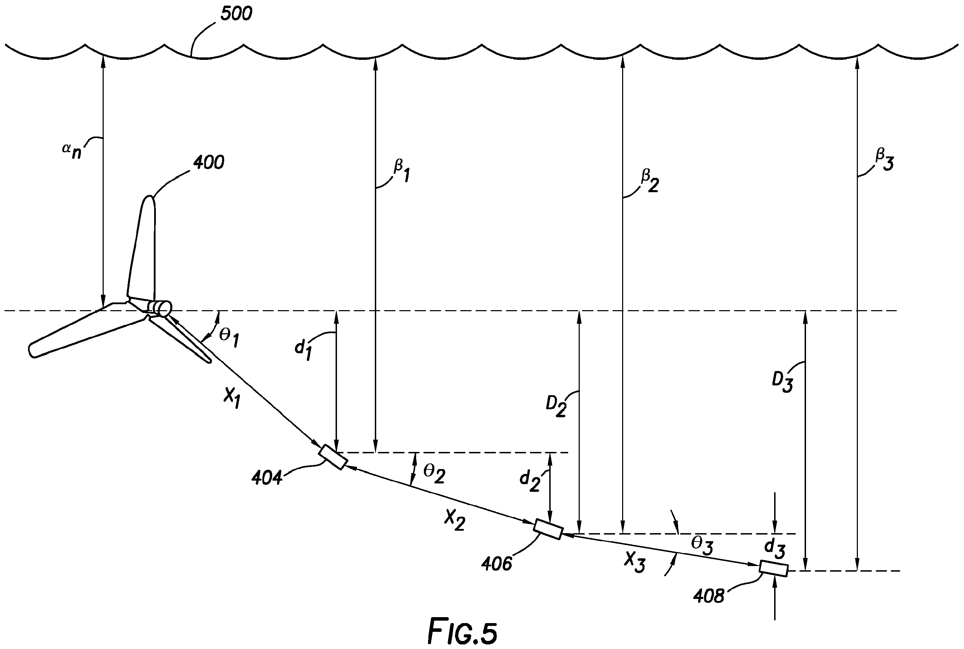

Figure 5 shows a simplified side-elevation view of a portion of a sensor streamer in accordance with at least some embodiments. In particular, Figure 5 shows steering device 400 (which again could be any of the previously discussed steering devices), and tilt sensors 404, 406, and 408 (Figure 4). The steering device 400 is shown at a depth $\alpha_n$ below the surface 500 of the water, and the depth $\alpha_n$ is known as discussed above. Example tilt sensor 404 resides at a distance $X_1$ along the sensor streamer portion (in the case of tilt sensor 404, relative to the steering device 400 or relative to the connector coupled to the steering device). As noted above the distance $X_1$ is established during construction and thus is known in advance. Example tilt sensor 406 resides at a distance $X_2$ along the sensor streamer portion relative to the tilt sensor 404 and, as noted above, the distance $X_2$ is established during construction and thus is known in advance. Example tilt sensor 408 resides at a distance $X_3$ along the sensor streamer portion relative to the tilt sensor 406 and, as noted above, the distance $X_3$ is established during construction and thus is known in advance. The relationships of the tilt sensors continues to the right in the view of the figure, but only three tilt sensors are shown so as not to unduly complicate the figure.

In accordance with example embodiments, a depth value for the location of each tilt sensor is calculated using the depth value at the steering device 400 and a tilt value from the tilt sensors. In particular, a computer system (e.g., in recording system 104, or onshore) reads the depth value $\alpha_n$ at the steering device 400 from the original recording. The computer system reads the tilt values $\theta_1$, $\theta_2$, $\theta_3$, and so on from the original recording. The computer system then calculates a plurality of depth values comprising one depth value for the location of each tilt sensor. Each calculation uses the depth value at the steering device and a tilt value associated with the tilt sensor. In the case of example tilt sensor 404, the computer system calculates a first incremental depth value (i.e., for tilt sensor 404 an incremental depth below the depth of the steering device 400) at a first incremental location away from the steering device 400 (i.e., the distance $X_1$). In example systems, the first incremental depth value may be calculated using the following relationship:

$$d_1 = X_1 \times \sin \theta_1, \qquad\qquad (1)$$

where $d_1$ is the first incremental depth below the depth $\alpha_n$, x is the multiplication operator, and $X_1$ and $\theta_1$ are as described above. A depth value $\beta_1$ associated with the example tilt sensor 404 is thus created as the sum of the incremental depth value $d_1$ and the depth value $\alpha_n$ at the steering device 400. The depth value $\beta_1$ thus may be placed in the new recording.

Similarly for example tilt sensor 406, the computer system calculates a second incremental depth value (i.e., for tilt sensor 406, an incremental depth below tilt sensor 404) at a second incremental location from the steering device (i.e., the distance $X_2$ away from tilt sensor 404). In example systems, the second incremental depth value may be calculated using the following relationship:

$$d_2 = X_2 \times \sin \theta_2, \qquad\qquad (2)$$

where $d_2$ is incremental depth below the depth $d_1$, x is the multiplication operation, and $X_2$ and $\theta_2$ are as described above. A relative depth $D_k$ of the tilt sensor 406 (i.e., depth below the steering device 400) may be calculated using the following relationship:

$$D_k = \sum_{i=1}^{k} d_i , \qquad\qquad (3)$$

where $D_k$ is the relative depth, d; is the ith incremental depth, and k=1 to N (where N is the total number of tilt sensors back to the steering device). For tilt sensor 406 under consideration, k=2 (i.e., summing incremental depths $d_1$ and $d_2$). The depth value $\beta_2$ associated with the example tilt sensor 406 may be created as the sum of the relative depth value $D_2$ and the depth value $\alpha_n$ at the steering device 400. Equivalently stated, the depth value $\beta_2$ associated with the example tilt sensor 406 may be created as the sum of the second incremental depth d2 with the first depth value $\beta_1$. The depth value $\beta_2$ thus may be placed in the new recording.

Similarly for example tilt sensor 408, the computer system calculates a third incremental depth value (i.e., for tilt sensor 408, an incremental depth below tilt sensor 406) at a third incremental location from the steering device (i.e., the distance $X_3$ away from tilt sensor 406). In example systems, the third incremental depth value may be calculated using the following relationship:

$$d_3 = X_3 \text{ x } \sin \theta_3, \qquad\qquad (4)$$

where $d_3$ is incremental depth below the depth $d_2$, x is the multiplication operation, and $X_3$ and $\theta_3$ are as described above. The relative depth $D_k$ of the tilt sensor 408 (i.e., depth below the steering device 400) may be calculated using Equation (3) above For tilt sensor 408 under consideration, k=3 (i.e., summing incremental depths $d_1$ through $d_3$). The depth value $\beta_3$ associated with the example tilt sensor 408 may be created as the sum of the relative depth value $D_3$ and the depth value $\alpha_n$ at the steering device 400. Equivalently stated, the depth value $\beta_3$ associated with the example tilt sensor 408 may be created as the sum of the third incremental depth $d_3$ with the second depth value $\beta_2$. The depth value $\beta_3$ thus may be placed in the new recording.

The process continues along sensor streamer portions until the tilt sensor just before the next steering device (not shown). As tilt values along the sensor streamer portion change signs (e.g., the portions rising toward the next steering device, or the portion rising away from a steering device in the positively buoyant case) the result of the sine operations become negative, and thus the incremental depths become negative values (indicating more shallow). Thus, the summing operations still take place, but the results of the summing operations are shallower depth values. The computer system performing the operation creates the new recording that includes the plurality of depth values associated with the plurality of tilt sensors. In some cases, the new recording is used to generate an image of the geological structure, and the image of the geological structure is enhanced due to use of more precise depths of the sensor groups.

In the example situation of Figures 4 and 5, the steering device 400, whose depth is used as part of calculating depth values at the location of each tilt sensor, is the proximal or upstream steering device. The various depth values may alternatively be calculated, however, using the next distal or downstream steering device. For example, and referring briefly to Figure 2, view 212, for the sensor streamer portion 208 the depth values at the location of each tilt sensor (none shown in Figure 2) may be calculated in reference to the depth of steering device 202, or the depth of steering device 204. The results should be similar. In fact, as quality control check the summation of the incremental depths between two contiguous steering devices (e.g., steering devices 202 and 204, or steering devices 204 and 206) should match the difference in depth between the two steering devices. For the case where the two contiguous steering devices are at the same depth (i.e., the difference in depth is zero), the summation of all the incremental depths between the contiguous steering devices (taking into account the sign convention) should be zero or within a predetermined window of values near zero. In the case where two contiguous steering devices are not at the same depth (e.g., slant tow operations where the proximal ends are towed shallower than the distal ends), the summation of all the incremental depths between the contiguous steering devices (taking into account the sign convention) should equal (or be approximately equal within a predetermined window of values) to the difference in depth between the contiguous steering devices.

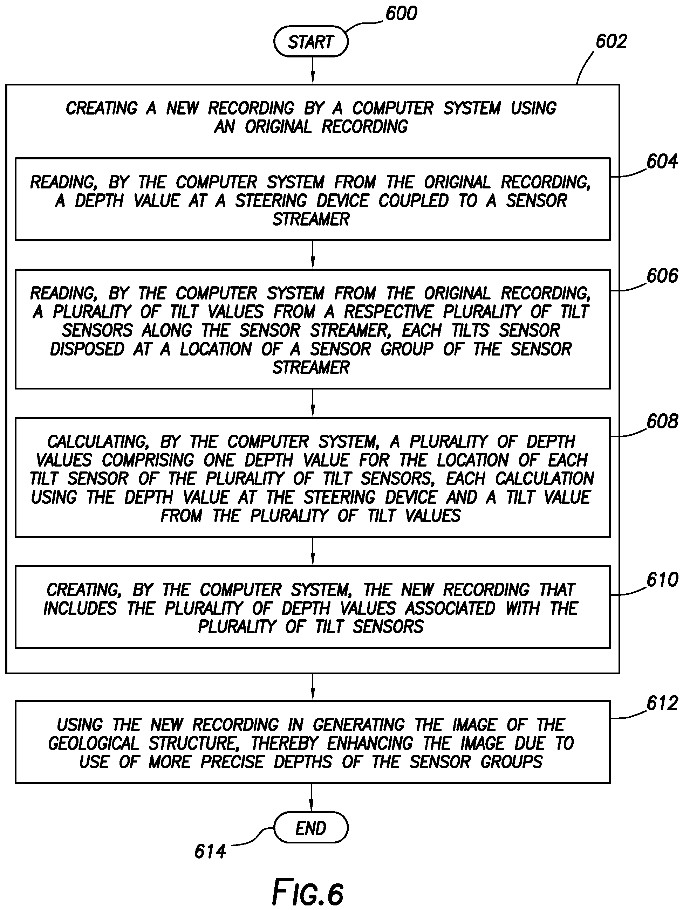

Figure 6 shows a method in accordance with at least some embodiments. In particular, the method may be used in a process for generating an image of a geological structure located beneath the sea floor based on marine seismic surveying techniques in which reflections of seismic energy from the geological structure are captured in an original recording. The method starts (block 600) and the improvement may comprise: creating a new recording by a computer system using the original recording (block 602); and using the new recording in generating the image of the geological structure, thereby enhancing the image due to use of more precise depths of the sensor groups (block 612). The creating of the new recording may comprise: reading, by the computer system from the original recording, a depth value at a steering device coupled to a sensor streamer (block 604); reading, by the computer system from the original recording, a plurality of tilt values from a respective plurality of tilt sensors along the sensor streamer, each tilt sensor disposed at a location of a sensor group of the sensor streamer (block 606); calculating, by the computer system, a plurality of depth values comprising one depth value for the location of each tilt sensor of the plurality of tilt sensors, each calculation using the depth value at the steering device and a tilt value from the plurality of tilt values (block 608); and creating, by the computer system, the new recording that includes the plurality of depth values associated with the plurality of tilt sensors (block 610). Thereafter the method may end (block 614).

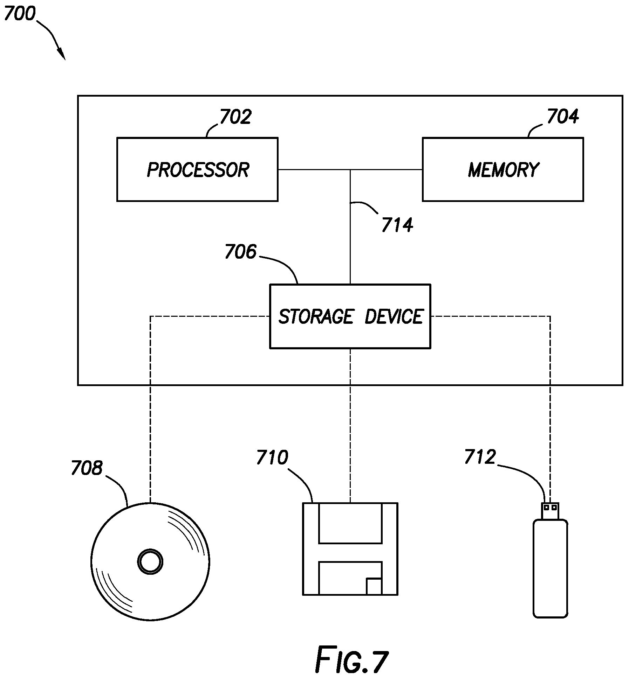

Figure 7 shows a computer system in accordance with at least some embodiments. The computer system 700 is an example of: a computer system upon which portions of the example methods discussed could be performed; a computer system that forms a part or all of the systems described (e.g., recording system 104, or onshore computer); or a computer system that manufactures the geophysical data product. The example computer system 700 comprises a processor 702 coupled to a memory 704 and a storage system or long term storage device 706. The processor 702 may be any currently available or after-developed processor, or group of processors. The memory 704 may be random access memory (RAM) which forms the working memory for the processor 702. In some cases, data and programs may be copied from the storage device 706 to the memory 704 as part of the operation of the computer system 700.

The long term storage device 706 is a device or devices that implement non-volatile long-term storage, which may also be referred to as a non-transitory computer-readable media. In some cases, the long term storage device is a hard drive or solid state drive, but other examples include optical discs 708, "floppy" disks 710, and flash memory devices 712. The various programs used to implement the programmatic aspects may thus be stored on the long term storage device 706, and executed by the processor 702. Relatedly, creation of the new recording of the various embodiments may be implemented by the processor 702 and communicated to the storage device 706 (including the example optical disc 708, floppy disk 710, or flash memory device 712 or magnetic tape) by way of a telemetry channel 714 to become a geophysical data product.

In accordance with a number of embodiments of the present disclosure, a geophysical data product may be manufactured. The geophysical data product may include, for example, the new recording that includes the depth values associated with locations of tilt sensors and/or sensor groups. Geophysical data, such as data previously collected by sensors, may be obtained (e.g., retrieved from a data library) and may be stored on a non-transitory, tangible computer-readable medium. The geophysical data product may be manufactured by creating the new recording offshore (i.e., by equipment on a vessel) or onshore (i.e., at a facility on land).

The above discussion is meant to be illustrative of the principles and various embodiments of the present invention. Numerous variations and modifications will become apparent to those skilled in the art once the above disclosure is fully appreciated. For example, while the specification has discussed the various embodiments in terms streamers sensing seismic signals, determining the depth between steering device may also find use in other types of surveys (e.g., electromagnetic), and thus the developmental context shall not be construed to be a limitation on the invention. It is intended that the following claims be interpreted to embrace all such variations and modifications.

## Claims

1. In a process for generating an image of a geological structure located beneath the sea floor using marine surveying techniques in which reflections of energy reflected from the geological structure are captured in an original recording, an improvement comprising:

   creating a new recording by a computer system using the original recording, the creating the new recording by:

      reading, by the computer system from the original recording, a depth value at a steering device coupled to a sensor streamer;
      reading, by the computer system from the original recording, a plurality of tilt values from a respective plurality of tilt sensors along the sensor streamer, each tilt sensor disposed at a location of a sensor group of the sensor streamer;
      calculating, by the computer system, a plurality of depth values comprising one depth value for the location of each tilt sensor of the plurality of tilt sensors, each calculation using the depth value at the steering device and a tilt value from the plurality of tilt values; and
      creating, by the computer system, the new recording that includes the plurality of depth values associated with the plurality of tilt sensors;

   using the new recording in generating the image of the geological structure, thereby enhancing the image due to use of more precise depths of the sensor groups.

2. The process of claim 1 wherein reading the depth value at the steering device comprises reading the depth value associated with a steering device proximal to the tilt sensors.

3. The process of claim 1 wherein reading the depth value at the steering device comprises reading the depth value associated with a steering device distal to the tilt sensors.

4. The process of claim 1 wherein calculating the plurality of depth values further comprises:

   calculating, by the computer system, a first incremental depth at a first incremental location away from the steering device;
   summing, by the computer system, the first incremental depth with the depth value associated with the steering device to create a first depth value;

calculating, by the computer system, a second incremental depth at a second incremental location away from the steering device, the second incremental location more distant from the steering device from the first incremental location;

summing, by the computer system, the second incremental depth with the first depth value associated with the first incremental location to create a second depth value;

calculating, by the computer system, a third incremental depth at a third incremental location away from the steering device, the third incremental location more distant from the steering device than both the first and second incremental locations; and

summing, by the computer system, the third incremental depth with the second depth value associated with the second incremental location to create a third depth value.

5. A method of manufacturing a geophysical data product, comprising:

reading, by a computer system, a depth value associated with a steering device coupled to a sensor streamer;

reading, by the computer system, a plurality of tilt values associated with a respective plurality of tilt sensors along the sensor streamer, each tilt sensor disposed at a location of a sensor group of the sensor streamer;

calculating, by the computer system, a plurality of depth values comprising one depth value associated with each tilt sensor of the plurality of tilt sensors, each calculation using the depth value associated with the steering device and a tilt value from the plurality of tilt values;

creating, by the computer system, a new recording that includes the plurality of depth values associated with the plurality of tilt sensors; and

storing the new recording on a tangible computer-readable medium.

6. The method of claim 5 wherein reading the depth value associated with the steering device comprises reading the depth value associated with a steering device proximal to the tilt sensors.

7. The method of claim 5 wherein reading the depth value associated with the steering device comprises reading the depth value associated with a steering device distal to the tilt sensors.

8. The method of claim 5 wherein calculating the plurality of depth values further comprises:

calculating, by the computer system, a first incremental depth at a first incremental location away from the steering device;

summing, by the computer system, the first incremental depth with the depth value associated with the steering device to create a first depth value;

calculating, by the computer system, a second incremental depth at a second incremental location away from the steering device, the second incremental location more distant from the steering device than the first incremental location;

summing, by the computer system, the second incremental depth with the first depth value associated with the first incremental location to create a second depth value;

calculating, by the computer system, a third incremental depth at a third incremental location away from the steering device, the third incremental location more distant from the steering device than both the first and second incremental locations; and

summing, by the computer system, the third incremental depth with the second depth value associated with the second incremental location to create a third depth value.

9. A system for analyzing geophysical data, comprising:

a processor;

a memory coupled to the processor, the memory storing instructions that, when executed by the processor, cause the processor to:

read a depth value associated with a steering device of a sensor streamer;

read a plurality of tilt values associated with a respective plurality of tilt sensors along the sensor streamer, each tilt sensor associated with a location of a sensor group of the sensor streamer;

calculate a plurality of depth values comprising one depth value associated with each tilt sensor of the plurality of tilt sensors, each calculation using the depth value associated with the steering device and a tilt value from the plurality of tilt values;

create a new recording that includes the plurality of depth values associated with the plurality of tilt sensors; and
store the new recording on a tangible computer-readable medium.

10. The system of claim 9 wherein when the processor reads the depth value associated with the steering device, the instructions further cause the processor to read the depth value associated with a steering device proximal to the tilt sensors.

11. The system of claim 9 wherein when the processor reads the depth value associated with the steering device, the instructions further cause the processor to read the depth value associated with a steering device distal to the tilt sensors.

12. The system of claim 9 wherein when the processor calculates the plurality of depth values, the instructs case the processor to:

calculate a first incremental depth at a first incremental location away from the steering device;
sum the first incremental depth with the depth value associated with the steering device to create a first depth value;
calculate a second incremental depth at a second incremental location away from the steering device, the second incremental location more distant from the steering device than the first incremental location;
sum the second incremental depth with the first depth value associated with the first incremental location to create a second depth value;
calculate a third incremental depth at a third incremental location away from the steering device, the third incremental location more distant from the steering device than both the first and second incremental locations; and
sum the third incremental depth with the second depth value associated with the second incremental location to create a third depth value.

13. A non-transitory computer-readable medium storing instructions that, when executed by a processor, cause the processor to:

read a depth value associated with a steering device of a sensor streamer;
read a plurality of tilt values associated with a respective plurality of tilt sensors along the sensor streamer, each tilt sensor associated with a location of a sensor group of the sensor streamer;
calculate a plurality of depth values comprising one depth value associated with each tilt sensor of the plurality of tilt sensors, each calculation using the depth value associated with the steering device and a tilt value from the plurality of tilt values;
create a new recording that includes the plurality of depth values associated with the plurality of tilt sensors; and
store the new recording on a tangible computer-readable medium.

14. The non-transitory computer-readable medium of claim 13 wherein when the processor reads the depth value associated with the steering device, the instructions further cause the processor to read the depth value associated with a steering device proximal to the tilt sensors.

15. The non-transitory computer-readable medium of claim 13 wherein when the processor reads the depth value associated with the steering device, the instructions further cause the processor to read the depth value associated with a steering device distal to the tilt sensors.

16. The non-transitory computer-readable medium of claim 13 wherein when the processor calculates the plurality of depth values, the instructions case the processor to:

calculate a first incremental depth at a first incremental location away from the steering device;
sum the first incremental depth with the depth value associated with the steering device to create a first depth value;
calculate a second incremental depth at a second incremental location away from the steering device, the second incremental location more distant from the steering device than the first incremental location;
sum the second incremental depth with the first depth value associated with the first incremental location to create a second depth value;

calculate a third incremental depth at a third incremental location away from the steering device, the third incremental location more distant from the steering device than both the first and second incremental locations; and

sum the third incremental depth with the second depth value associated with the second incremental location to create a third depth value.

FIG.1

FIG.2

EP 3 477 345 A1

FIG.3

EP 3 477 345 A1

FIG.4

EP 3 477 345 A1

FIG.5

EP 3 477 345 A1

*600*

( START )

*602*

CREATING A NEW RECORDING BY A COMPUTER SYSTEM USING
AN ORIGINAL RECORDING

*604*

READING, BY THE COMPUTER SYSTEM FROM THE ORIGINAL RECORDING,
A DEPTH VALUE AT A STEERING DEVICE COUPLED TO A SENSOR
STREAMER

*606*

READING, BY THE COMPUTER SYSTEM FROM THE ORIGINAL RECORDING,
A PLURALITY OF TILT VALUES FROM A RESPECTIVE PLURALITY OF TILT
SENSORS ALONG THE SENSOR STREAMER, EACH TILTS SENSOR
DISPOSED AT A LOCATION OF A SENSOR GROUP OF THE SENSOR
STREAMER

*608*

CALCULATING, BY THE COMPUTER SYSTEM, A PLURALITY OF DEPTH
VALUES COMPRISING ONE DEPTH VALUE FOR THE LOCATION OF EACH
TILT SENSOR OF THE PLURALITY OF TILT SENSORS, EACH CALCULATION
USING THE DEPTH VALUE AT THE STEERING DEVICE AND A TILT VALUE
FROM THE PLURALITY OF TILT VALUES

*610*

CREATING, BY THE COMPUTER SYSTEM, THE NEW RECORDING THAT
INCLUDES THE PLURALITY OF DEPTH VALUES ASSOCIATED WITH THE
PLURALITY OF TILT SENSORS

*612*

USING THE NEW RECORDING IN GENERATING THE IMAGE OF THE
GEOLOGICAL STRUCTURE, THEREBY ENHANCING THE IMAGE DUE TO
USE OF MORE PRECISE DEPTHS OF THE SENSOR GROUPS

( END )

*614*

FIG.6

*FIG.7*

Europäisches
Patentamt

European
Patent Office

Office européen
des brevets

# EUROPEAN SEARCH REPORT

**Application Number**

EP 18 20 1638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/323467 A1 (GOUJON NICOLAS [NO] ET AL) 31 December 2009 (2009-12-31) * abstract * * figures 1,2,4,5 * * paragraphs [0015], [0023] - [0034] * ----- | 1-16 | INV. G01V1/38 G01V1/36 |
| X | US 2013/077436 A1 (SOUBARAS ROBERT [FR]) 28 March 2013 (2013-03-28) * abstract; figures 2,5,6 * * paragraphs [0065] - [0075] * ----- | 1,2,5,6, 9,10,13, 14 | |
| A | GRANT TIMOTHY J ED - DEMIRBILEK ZEKI: "The vertical shape of a buoyant acoustic streamer between depth control units", OCEAN ENGINEERING, vol. 105, 8 July 2015 (2015-07-08), pages 176-185, XP029254973, ISSN: 0029-8018, DOI: 10.1016/J.OCEANENG.2015.06.004 * abstract * * figure 1 * * pages 176-181 * ----- | 1-16 | |

**TECHNICAL FIELDS
SEARCHED      (IPC)**

G01V

The present search report has been drawn up for all claims

| Place of search | Date of completion of the search | Examiner |
|---|---|---|
| The Hague | 14 March 2019 | Meyer, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 1638

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2019

| Patent document cited in search report | | | Publication date | Patent family member(s) | | | Publication date |
|---|---|---|---|---|---|---|---|
| US | 2009323467 | A1 | 31-12-2009 | BR | PI0913225 | A2 | 19-01-2016 |
| | | | | GB | 2473360 | A | 09-03-2011 |
| | | | | US | 2009323467 | A1 | 31-12-2009 |
| | | | | WO | 2009158205 | A2 | 30-12-2009 |
| US | 2013077436 | A1 | 28-03-2013 | AU | 2012227325 | A1 | 11-04-2013 |
| | | | | BR | 102012024215 | A2 | 18-10-2016 |
| | | | | CA | 2790420 | A1 | 22-03-2013 |
| | | | | CN | 103018771 | A | 03-04-2013 |
| | | | | EP | 2573593 | A2 | 27-03-2013 |
| | | | | MX | 337803 | B | 18-03-2016 |
| | | | | SG | 188763 | A1 | 30-04-2013 |
| | | | | US | 2013077436 | A1 | 28-03-2013 |
| | | | | WO | 2013041680 | A2 | 28-03-2013 |
| | | | | ZA | 201207064 | B | 29-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62575639 A